# EUROPÄISCHE PATENTSCHRIFT

(11) **EP 0 830 467 B1**
(45) Veröffentlichungstag und Bekanntmachung des Hinweises auf die Patenterteilung: **03.02.1999**
(21) Anmeldenummer: 96921932.8
(22) Anmeldetag: 05.06.1996
(51) Int. Cl.: D01F 6/36

(54) **SCHMELZBARE, CHLORFREIE VINYLACETATCOPOLYMERFASER**
FUSIBLE, CHLORINE-FREE VINYL ACETATE COPOLYMER FIBRE
FIBRE FUSIBLE EN COPOLYMERE D'ACETATE DE VINYLE EXEMPT DE CHLORE

(30) Priorität: 08.06.1995 DE 19520990
(43) Veröffentlichungstag der Anmeldung: 25.03.1998
(73) Patentinhaber: Wacker-Chemie GmbH, 81737 München (DE)
(72) Erfinder: TSCHIRNER, Peter, D-84547 Emmerting (DE); KINKEL, Johannes, D-84547 Emmerting (DE); GORZEL, Dieter, D-84489 Burghausen (DE)
(74) Vertreter: Schuderer, Michael, Dr.
(86) Internationale Anmeldenummer: EP9602449
(87) Internationale Veröffentlichungsnummer: WO9641907

(56) Entgegenhaltungen:
- EP-A- 0 573 037
- US-A- 2 354 744

## Beschreibung

Die Erfindung betrifft schmelzbare, chlorfreie Vinylacetat-copolymerfasern, Verfahren zu deren Herstellung sowie deren Verwendung als faserförmige Bindemittel.

Zur Erhöhung der Widerstandsfestigkeit gegenüber mechanischer Belastung werden Fasergebilde, beispielsweise Faservliese, mit Bindemitteln verfestigt. Diese Bindemittel können in Form von Feststoffen, wie Pulver oder Fasern, oder als Flüssigkeiten, in Form von Lösungen oder Dispersionen, eingesetzt werden. Gegenüber wäßrigen Bindemitteldispersionen weisen faserförmige Bindemittel eine Reihe von Vorteilen auf. Zur Vliesbindung mittels wäßriger Dispersionen wird eine spezielle Auftragsmaschine benötigt und eine Trockeneinheit zur Entfernung der Wasserphase der Dispersion. Neben dem apparativen Aufwand ist die Wasserentfernung auch energetisch sehr aufwendig. Demgegenüber lassen sich faserförmige Bindemittel mit den zu bindenden Fasern auf den gebräuchlichen Vorrichtungen zur Herstellung textiler Flächengebilde verarbeiten. Beispielsweise können die Bindemittel fasern zusammen mit den zu bindenden Fasern ausgelegt werden, und das Fasermaterial durch Erhitzen auf die Schmelztemperatur der Bindemittelfaser mit weit weniger Energieaufwand binden.

Herkömmliche Thermofasern, welche zur Bindung von textilen Flächengebilden eingesetzt werden, sind beispielsweise Polyolefine wie Polyethylen- oder Polypropylenfasern oder Polyester wie Polyethylenterephthalatfasern. Diese Fasern haben allerdings den Nachteil, daß sich deren Schmelzviskosität in einem schmalen Temperaturintervall drastisch ändert. Bei der Verarbeitung dieser Fasern muß daher die Temperatur und die Verweilzeit bei der Thermobindung sehr genau eingehalten werden, da bereits geringe Temperaturschwankungen zum Abfließen des geschmolzenen Faserbinders führen können.

Ein breiteres Temperaturintervall zur Verarbeitung steht bei Mischpolymerfasern (MP-Faser) auf der Basis von Vinylacetat-Vinylchlorid-Copolymerfasern zur Verfügung. Nachteilig ist bei diesen Fasern der hohe Chlorgehalt, der zu Problemen bei der Entsorgung und Wiederverwertung damit gebundener Textilien führt.

Es bestand daher die Aufgabe eine schmelzbare Thermoplastfaser zur Verfügung zu stellen, welche die gleiche Schmelzcharakteristik wie die MP-Faser aufweist, jedoch kein Chlor enthält. Zusätzlich sollte das Polymerisat schmelzspinnbar sein, um die Entsorgungsproblematik bei nur in Lösung verspinnbaren Polymerisaten zu umgehen.

Gegenstand der Erfindung sind schmelzbare Vinylacetat-Copolymerfasern auf der Basis von Vinylacetat-Copolymerisaten enthaltend
a) mindestens 40.0 Gew.% Vinylacetat-Einheiten,
b) 15.0 bis 50.0 Gew.% Monomereinheiten eines oder mehrerer chlorfreier, ethylenisch ungesättigter Monomere, deren Homopolymerisate eine Glasübergangstemperatur Tg von 40 bis 120°C aufweisen,
c) 0.1 bis 15.0 Gew.% Monomereinheiten eines oder mehrerer ethylenisch ungesättigter Monomere, deren Homopolymerisate eine Glasübergangstemperatur Tg von -100 bis 0°C aufweisen, wobei sich die Angaben in Gew.% auf 100 Gew.% auf addieren.

Vorzugsweise enthalten die Vinylacetat-Copolymerisate 60 bis 70 Gew.% Vinylacetat, 15 bis 25 Gew.% eines oder mehrerer Monomere b) und 3 bis 10 Gew.% eines oder mehrerer Monomere c). Zum Erhalt einer optimalen Schmelzviskosität werden Vinylacetat-Copolymerisate bevorzugt, deren Molekulargewicht einem K-Wert nach Fikentscher (1 %-ige Lösung in THF/Wasser 93:7 (V/V) bestimmt nach DIN 53726) von 30 bis 80 entspricht.

Bevorzugte Comonomere b) sind Vinylester von gesättigten aliphatischen Monocarbonsäuren mit 5 bis 9 C-Atomen, welche in A-Stellung zur Carboxlgruppe ein quartäres C-Atom aufweisen, beispielsweise VeoVa5^{R} oder VeoVa9^{R}, oder Dimethylfumarat, Di-Isopropylfumarat, Di-t-Butylfumarat, Methyl-t-Butylfumarat, Dimethylmaleinat, Di-Isopropylmaleinat, Di-t-Butylmaleinat, Methyl-t-Butylmaleinat, 4-t-Butyl-cyclohexylacrylat, t-Butylacrylat, Methylmethacrylat, N-Vinylyrrolidon. Besonders bevorzugt wird als Comonomer b) Diisopropylfumarat.

Bevorzugte Comonomere c) sind Vinvllaurat, Di-n-butylmaleinat, Di-2-Ethylhexylmaleinat, Di-n-Butylfumarat, Di-2-Ethylhexylfumarat, Ethylen, Vinylester von gesättigten aliphatischen Monocarbonsäuren mit 10 C-Atomen, welche in A-Stellung zur Carboxylgruppe ein quartäres C-Atom aufweisen (VeoVa10^{R}). Besonders bevorzugte Comonomere c) sind Di-n-butylmaleinat, Di-2-ethylhexylmaleinat und Ethylen.

Der Erweichungsbereich der erfindungsgemäßen Vinylacetat-Copolymerfaser liegt vorzugsweise zwischen 60 und 150°C, besonders bevorzugt 80 bis 120°C. Der Titer (Gewicht/Länge) der Faser liegt vorzugsweise zwischen 3 und 25 dtex. Besonders bevorzugt werden die Bereiche 3 bis 6 dtex und 17 bis 25 dtex. Die feinheitsbezogenen Festigkeiten liegen vorzugsweise bei 5 bis 10 cN/tex. Die Faserlänge ist beliebig einstellbar. Zur Papierbindung werden Faserlängen von 4-10 mm, zur Textilbindung Faserlängen von 40-70 mm bevorzugt.

Ein weiterer Gegenstand der Erfindung ist ein Verfahren zur Herstellung von schmelzbaren Vinylacetat-Copolymerfasern mittels
A) radikalischer Polymerisation in einem organischen Lösungsmittel oder in wäßriger Suspension einer Comonomer-Zusammensetzung enthaltend mindestens 40.0 Gew.% Vinylacetat, 15.0 bis 50.0 Gew.% eines oder mehrerer chlorfreier, ethylenisch ungesättigter Monomere, deren Homopolymerisate eine Glasübergangstemperatur Tg von 40 bis 120°C aufweisen, und 0.1 bis 15.0 Gew.% eines oder mehrerer ethylenisch ungesättigter Monomere, deren Homopolymerisate eine Glasübergangstemperatur Tg von -100 bis 0°C aufweisen,
B) Isolierung der Vinylacetatcopolymerisate durch Ausfällen, Absaugen oder Abdestillation der flüssigen Phase und Trocknung, und
C) Verspinnen des Vinylacetatcopolymerisats aus der Lösung oder der Schmelze.

Schutzkolloide, die mit Erfolg bei der Suspensionspolymerisation eingesetzt werden können, sind unter anderem Polyvinylpyrrolidon, Polyvinylalkohol, Cellulosederivate, wie Hydroxyethylcellulose, carbonsäurehaltige Vinylestercopolymere sowie auch anorganische Verteiler wie Aluminium- oder Magnesiumhydroxid. Die eingesetzte Menge an Schutzkolloid beträgt vorzugsweise zwischen 0,05 und 3,0 Gew.%, bezogen auf die Comonomermenge. Gegebenenfalls können bei der Suspensionspolymerisation noch geringe Mengen an Emulgator zugesetzt werden. Besonders bewährt haben sich Alkylsulfate und Alkylsulfonate in Mengen von vorzugsweise 0,001 bis 1,0 Gew.%, bezogen auf die Comonomermenge.

Es kann nach dem Vorlage- oder nach dem Zulaufverfahren gearbeitet werden, wobei der Zulauf dieselbe als auch eine von der, eventuell vorhandenen, Vorlage unterschiedliche Zusammensetzung haben kann.

Als Initiatoren für die Suspensions- und Lösungspolymerisation werden die üblichen organischen Peroxide und Azoverbindungen wie Dibutylperoxydicarbonat, Bis(4-tert.-butylcyclohexyl)peroxydicarbonat, Bis(2-ethylhexyl)peroxydicarbonat, Dicetylperoxydicarbonat, tert.-Butyl-peroxypivalat, Dilaurylperoxid, Dibenzoylperoxid, Dicumylperoxid, tert.-Butylperoxy-2-ethylhexanoat, 2,2-Bis(tert.-butylperoxy)butan, tert.-Butylhydroperoxid, Dicyclohexylperoxidicarbonat, 2,2'-Azoisobutyronitril eingesetzt.

Es kann ein Initiator allein oder eine Mischung verschiedener Initiatoren zur Polymerisation benutzt werden. Bei der Suspensionspolymerisation hat es sich als sinnvoll erwiesen mit einer Kombination von Initiatoren mit unterschiedlichen Zersetzungstemperaturen (unterschiedliche Halbwertzeiten bei der vorgegebenen Polymerisationstemperatur) zu arbeiten, da so eine raschere und kontinuierlichere Polymerisationsreaktion erreicht wird. Bei der Suspensionspolymerisation werden der oder die Initiatoren in der Regel mit vorgelegt, da die verwendeten organischen Initiatoren nur schwer über die Wasserphase in die Perlen diffundieren. Bei der Polymerisation in einem organischen Lösungsmittel ist es im allgemeinen sinnvoller nur einen Teil des oder der Initiatoren vorzulegen und den Rest im Laufe der Reaktion zuzudosieren. Außerdem ist es oft von Vorteil zusätzlich zu den Initiatoren noch reduzierende Verbindungen wie tert.-aromatische Amine, oder Ascorbinsäure zuzugeben. Die Initiatoren werden in der Regel in Mengen zwischen 0.01 - 1.0 Gew.% bezogen auf die Summe der Monomeren eingesetzt. Die Polymerisationstemperatur beträgt, je nachdem ob mit einem rein thermischen oder mit einem Redoxsystem gearbeitet wird, zwischen 30 und 95°C. Gegen Ende der Polymerisation wird die Temperatur zur Vervollständigung der Reaktion im allgemeinen auf eine höhere Temperatur als die Anfangspolymerisationstemperatur gestellt.

Die Einstellung des Molekulargewichtes erfolgt in der für den Fachmann bekannten Weise. Bei der Lösungspolymerisation durch die Wahl eines Lösungsmittels mit geeigneter Übertragungskonstante. Bei der Suspensionspolymerisation kann das Molekulargewicht durch Zugabe von Reglern wie Dodecylmercaptan, Mercaptoethanol oder Acetaldehyd eingestellt werden. Vorzugsweise werden die Regler in Mengen von 0,01 bis 1,0 Gew% bezogen auf die Comonomermenge eingesetzt.

Die Isolierung der Vinylacetatcopolymerisate erfolgt in üblicher Art und Weise. Bei den Suspensionspolymerisaten durch Absaugen und Waschen mit Wasser und anschließendem Trocknen. Wird die Polymerisation in einem organischen Lösungsmittel durchgeführt, so kann das Copolymerisat durch Ausfällen in einem Fällungsmittel wie beispielsweise Methanol oder Petroleumbenzin isoliert werden, wobei das Volumenverhältnis von Fällungsmittel zur Lösung mindestens 5 : 1 betragen sollte. Das Polymerisat kann auch durch Abdestillieren des Lösungsmittels isoliert werden.

Das als Pulver oder Granulat vorliegende Vinylacetat-Copolymerisat kann mit aus dem Stand der Technik bekannten Spinnverfahren zur Faser versponnen werden. Eine Aufstellung und Beschreibung bekannter Spinnverfahren findet sich beispielsweise in Ullmanns Encyclopädie der technischen Chemie 4. Aufl., Band 11, S. 249 ff. (1976). Die Herstellung der Faser kann prinzipiell sowohl nach dem Lösungsspinnverfahren als auch nach dem Schmelzspinnverfahren erfolgen. Das Schmelzspinnverfahren wird bevorzugt.

Bei der Verspinnung nach dem Schmelzspinnverfahren wird das Vinylacetat-Copolymerisat vorzugsweise in einem mit einer Heizeinrichtung ausgerüsteten Schmelzextruder mit Ein- oder Mehrschneckenpressen aufgeschmolzen. Die Schmelztemperatur beträgt im allgemeinen bis zu 240°C, vorzugsweise von 180 bis 200°C, gegebenenfalls kann auch ein Temperaturgradient eingerichtet werden. Die Schmelze wird bei einem Druck von vorzugsweise 50 bis 100 bar in die Spinndüse(n) gepumpt. Vorzugsweise wird die Schmelze in einen Spinnbalken mit mehreren Spinndüsen gepumpt, wobei die Faserdicke über Düsendurchmesser und Abzugsgeschwindigkeit gesteuert wird.

Die Faser kann nach der Verdüsung in herkömmlichen Streckwerken mit Mehrfachwalzen heiß verstreckt werden. Zur Herstellung von Stapelfasern können die Fasern beispielsweise mit einem Schneidrad auf die gewünschte Länge geschnitten werden. Endlosfasern können mittels bekannter Einrichtungen gekräuselt werden.

Die erfindungsgemäßen Vinylacetatcopolymer-Fasern eignen sich vor allem als faserförmiges Bindemittel zur Verfestigung von natürlichen oder synthetischen Fasermaterialien. Beispiele hierfür sind Holzfaser, Cellulosefaser, Wolle, Baumwolle, Mineralfasern, Keramikfasern, Kunstfasern auf der Basis von faserbildenden Polymeren wie Viskosefaser, Polyethylen-, Polypropylen-, Polyester-, Polyamid-, Polyacrylnitril- oder Carbonfaser oder Fasern von Homo- oder Copolymerisaten des Tetrafluorethylens.

Vor der Verfestigung werden die zu bindenden Fasern flächenhaft ausgebreitet. Die Verfahren hierzu sind bekannt und primär von der Anwendung, in die das verfestigte Fasermaterial geht, abhängig. Die Fasern können mittels einer Luftlege-, Naßlege-, Direktspinn- oder Krempelvorrichtung ausgelegt werden. Gegebenenfalls können die Flächengebilde vor der Verfestigung mit dem Faserbindemittel noch mechanisch verfestigt werden, beispielsweise durch Kreuzlegen, Nadeln oder Wasserstrahlverfestigung.

Bei der erfindungsgemäßen Verwendung wird das faserförmige Bindemittel in an sich bekannter Weise mit der zu bindenden Faser vermischt. Je nach Anwendungsbereich beträgt die für die Verfestigung des Fasermaterials notwendige Menge an Faserbindemittel vorzugsweise von 1 bis 30 Gew.%, bezogen auf das Gewicht der zu bindenden Faser.

In einer bevorzugten Ausführungsform wird die Vinylacetatcopolymer-Faser vor dem Auslegen des zu bindenden Fasermaterials mit diesem in einer Fasermischapparatur gemischt und die Fasermischung ausgelegt. Bevorzugt wird auch eine Ausführungsform, bei der das zu bindende Fasermaterial und die Vinylacetatcopolymer-Faser gemeinsam in eine Krempelvorrichtung geführt werden.

Für die Bindung von Fasermaterialien auf der Basis von Polymerfasern können das Vinylacetatcopolymerisat und das Faserpolymer gemeinsam im Direktspinnverfahren versponnen werden und das dabei erhaltenene Fasergemisch ausgelegt werden.

Die Verfestigung des Fasermaterials erfolgt durch Erwärmung auf eine Temperatur von vorzugsweise 80 bis 120°C, gegebenenfalls unter Druck. Die Wärmebehandlung zur Bindung des Fasermaterials erfolgt mittels bekannter Einrichtungen; beispielsweise mit beheizbaren Geliertrommeln, in einem beheizten Trockenkanal oder mittels fokussierter heißer Luftstrahlen (air-through-bonding).

Besonders geeignet ist die Vinylacetatcopolymer-Faser zur Bindung von voluminösen Fasermaterialien, beispielsweise zur Herstellung von Polster-, Isolier- und Filterwatten. Ein weiterer bevorzugter Anwendungsbereich für die Vinylacetatcopolymer-Faser ist deren Verwendung zur Ausrüstung von Vliesstoffen für Heißsiegelbarkeit, beispielsweise Teebeutelpapier oder heißsiegelbare Watten.

Bevorzugt ist auch die Verwendung der Vinylacetatcopolymer-Faser zur Herstellung von Nadelfilz. Im Stand der Technik werden zur Beschichtung vor allem wäßrige Dispersionen auf der Basis von Styrol/Butadien-Kautschuk, Ethylen/Vinylacetat- und Ethylen/Vinylacetat/Vinylchlorid-Copolymeren eingesetzt. Die Dispersionen werden auf das durch Nadeln verfestigte Fasergebilde aufgetragen und im Heißkalander verfilmt. Bei der Verwendung der Vinylacetatcopolymer-Faser ist die aufzuwendende Trocknerleistung und damit der zur Herstellung notwendige Energiebedarf erheblich reduziert. Die Notwendigkeit eines separaten Aggregats zur Auftragung des Bindemittels entfällt.

Zusammenfassend ausgedrückt liegt der Vorteil der Verwendung der Vinylacetatcopolymer-Faser bei Anwendungen, bei denen traditionell wäßrige Systeme eingesetzt werden, zum Beispiel Vliesstoffbindung, in einer deutlichen Verminderung des Trocknungsaufwands und der Abwassermengen. Es treten im Gegensatz zur Verwendung von wäßrigen Bindemitteldispersionen keine Bindemittelverluste wie beim Versprühen oder Auftragen von wäßrigen Dispersionen auf. Weiter werden keine separaten Einrichtungen zur Bindemittelauftragung benötigt.

Ein weiterer Vorteil der erfindungsgemäßen Faser besteht darin, daß im Gegensatz zum Verhalten herkömmlicher Fasern auf Thermoplast-Basis, die Schmelzviskosität über einen weiten Temperaturbereich nahezu konstant bleibt. Temperaturschwankungen bei der Verarbeitung sind daher weniger schwerwiegend als bei der Verarbeitung herkömmlicher Thermoplast-Fasern.

Die nachfolgenden Beispiele dienen der weiteren Erläuterung der Erfindung:

### Herstellung der Vinylacetat-Copolymerisate

### Beispiel 1

In einem 500 l Reaktor mit Blattrührer, Rückflußkühler, Stickstoffspülung und Dosiereinrichtungen wurden 194 Liter entionisiertes Wasser, 1,92 Liter einer 0,1 %igen Kupferacetatlösung und 7,66 kg einer 5 %igen Polyvinylpyrrolidonlösung vorgelegt. Zu dieser Vorlage wurde bei Raumtemperatur bei einer Rührerdrehzahl von 40 U/Min. eine Mischung von 7,66 kg Vinylacetat, 0,48 kg Diisopropylfumarat, 0,48 kg Di-n-butylmaleinat, 0,242 kg Dicyclohexylperoxodicarbonat und 0,255 kg tertiär-Butylperpivalat zugegeben. Anschließend wurde der Reaktor zweimal evakuiert und mit Stickstoff belüftet.

Es wurde auf die Reaktionstemperatur von 55°C aufgeheizt und die Rührerdrehzahl auf 100 U/Min. erhöht. Beim Erreichen der Innentemperatur wurden die Dosierungen eingefahren. Dosierung 1 war eine Mischung aus 66,10 kg Vinylacetat, 16,80 kg Diisopropylfumarat und 4,31 kg Di-n-butylmaleinat. Dosierung 2 war eine Lösung von 0,632 kg Natriumhydrogencarbonat in 19,20 Liter entionisiertem Wasser. Beide Dosierungen wurden mit konstanter Dosierrate über einen Zeitraum von 300 Minuten dosiert. Nach Dosierende wurde die Innentemperatur noch zwei Stunden auf 55°C gehalten und anschließend für zwei Stunden auf 70°C erhöht. Anschließend wurde für eine halbe Stunde ein Vakuum bei 70°C angelegt. Nach dem Abkühlen auf 25°C wurde das Produkt über eine Nutsche abgesaugt und mehrmals mit Wasser gewaschen. Die Trocknung erfolgte in einem Wirbelschichttrockner. Die Restfeuchte betrug hinterher 0,5 %.

Das erhaltene Perlpolymerisat hatte einen mittleren Teilchendurchmesser von 0,2 mm und einen K-Wert von 63, die Glasübergangstemperatur (DSC) lag bei 32°C, der Blockpunkt bei 45°C.

### Beispiel 2

In einem 500 l Reaktor mit Blattrührer, Rückflußkühler, Stickstoffspülung und Dosiereinrichtungen wurden 194 Liter entionisiertes Wasser, 1,92 Liter einer 0,1 %igen Kupferacetatlösung und 7,63 kg einer 5 %igen Polyvinylpyrrolidonlösung vorgelegt. Zu dieser Vorlage wurde bei Raumtemperatur bei einer Rührerdrehzahl von 40 U/Min. eine Mischung von 6,67 kg Vinylacetat, 0,95 kg Diisopropylfumarat, 0,95 kg Di-n-butylmaleinat, 0,242 kg Dicyclohexylperoxodicarbonat und 0,255 kg tertiär- Butylperpivalat zugegeben. Anschließend wurde der Reaktor zweimal evakuiert und mit Stickstoff belüftet.

Es wurde auf die Reaktionstemperatur von 55°C aufgeheizt und die Rührerdrehzahl auf 100 U/Min. erhöht. Beim Erreichen der Innentemperatur wurden die Dosierungen eingefahren. Dosierung 1 war eine Mischung aus 58,10 kg Vinylacetat und 22,90 kg Diisopropylfumarat. Dosierung 2 bestand aus 5,72 kg Di-n-butylmaleinat. Dosierung 3 war eine Lösung von 0,629 kg Natriumhydrogencarbonat in 19,10 Liter entionisiertem Wasser. Die Dosierungen 1 und 3 wurden mit konstanter Dosierrate über einen Zeitraum von 300 Minuten dosiert, wohingegen Dosierung 2 mit einer konstanten Dosierrate über einen Zeitraum von 180 Minuten dosiert wurde. Nach Dosierende wurde die Innentemperatur noch zwei Stunden auf 55°C gehalten und anschließend für zwei Stunden auf 70°C erhöht. Anschließend wurde für eine halbe Stunde ein Vakuum bei 70°C angelegt. Nach dem Abkühlen auf 25°C wurde das Produkt über eine Nutsche abgesaugt und mehrmals mit Wasser gewaschen. Die Trocknung erfolgte in einem Wirbelschichttrockner. Die Restfeuchte betrug hinterher 1 %.

Das erhaltene Perlpolymerisat hatte einen mittleren Teilchendurchmesser von 0,2 mm und einen K-Wert von 60, die Glasübergangstemperatur (DSC) lag bei 41°C, der Blockpunkt bei 50°C.

### Herstellung der Vinylacetatcopolymerfaser

Das Copolymer aus Beispiel 1 wurde in einem Extruder mit 6 Heizzonen bei einem Temperaturgradient von 20°C am Schnekkenanfang bis 180°C am Schneckenende aufgeschmolzen und über einen Filter mit 5000 Maschen/cm² in eine Spinnpumpe gefördert. Die Schmelze verließ die Spinnpumpe mit einem Schmelzedruck von 31 bar und wurde durch einen Spinnbalken mit 6109 Spinndüsen mit 0,4 mm Durchmesser versponnen. Der Faserstrang wurde durch einen 30 mm breiten Spalt mit Raumluft angeblasen und über eine mit Wasser benetzte Walze weiter abgekühlt. Der Abzug der Faser erfolgte über ein Streckwerk mit einer Geschwindigkeit von 25 m/min.
Fasercharakteristik:
Erweichungsbereich > 60°C; Titer = 15.0 dtex; Festigkeit = 8.0 cN/tex.

In einem weiteren Versuch wurde das Copolymer aus Beispiel 1 in einem Extruder mit 6 Heizzonen bei einem Temperaturgradient von 20°C am Schneckenanfang bis 180°C am Schneckenende aufgeschmolzen und über ein Siebpaket aus einem 100 µm- und 10 µm-Sieb in eine Spinnpumpe gefördert. Die Schmelze verließ die Spinnpumpe mit einem Schmelzedruck von 10 bis 20 bar und wurde über eine Spinndüse mit einem Lochdurchmesser von 0.2 mm versponnen. Der Faserstrang wurde über eine Abzugsgalette abgezogen und gewickelt (Abzugsgeschwindigkeit > 1000 m/min). Man erhielt ein Faserprodukt analog dem oben beschriebenen.

## Patentansprüche

1. Schmelzbare Vinylacetat-Copolymerfasern auf der Basis von Vinylacetat-Copolymerisaten enthaltend
a) mindestens 40.0 Gew.% Vinylacetat-Einheiten,
b) 15.0 bis 50.0 Gew.% Monomereinheiten eines oder mehrerer chlorfreier, ethylenisch ungesättigter Monomere, deren Homopolymerisate eine Glasübergangstemperatur Tg von 40 bis 120°C aufweisen,
c) 0.1 bis 15.0 Gew.% Monomereinheiten eines oder mehrerer ethylenisch ungesättigter Monomere, deren Homopolymerisate eine Glasübergangstemperatur Tg von -100 bis 0°C aufweisen.

2. Verfahren zur Herstellung von schmelzbaren Vinylacetat-Copolymerfasern mittels
A) radikalischer Polymerisation in einem organischen Lösungsmittel oder in wäßriger Suspension einer Comonomer- Zusammensetzung enthaltend mindestens 40.0 Gew.% Vinylacetat, 15.0 bis 50.0 Gew.% eines oder mehrerer chlorfreier, ethylenisch ungesättigter Monomere, deren Homopolymerisate eine Glasübergangstemperatur Tg von 40 bis 120°C aufweisen, und 0.1 bis 15.0 Gew.% eines oder mehrerer ethylenisch ungesättigter Monomere, deren Homopolymerisate eine Glasübergangstemperatur Tg von -100 bis 0°C aufweisen,
B) Isolierung der Vinylacetatcopolymerisate durch Ausfällen, Absaugen oder Abdestillation der flüssigen Phase und Trocknung, und
C) Verspinnen des Vinylacetatcopolymerisats aus der Lösung oder der Schmelze.

3. Verwendung der Vinylacetatcopolymer-Faser nach Anspruch 1 oder 2 als faserförmiges Bindemittel zur Verfestigung von natürlichen oder synthetischen Fasermaterialien.

## Claims

1. Fusible vinyl acetate copolymer fibres based on vinyl acetate copolymers comprising
a) at least 40.0% by weight of vinyl acetate units,
b) 15.0 to 50.0% by weight of monomer units of one or more chlorine-free, ethylenically unsaturated monomers whose homopolymers have a glass transition temperature Tg of 40 to 120°C, and
c) 0.1 to 15.0% by weight of monomer units of one or more ethylenically unsaturated monomers whose homopolymers have a glass transition temperature Tg of -100 to 0°C.

2. Process for the production of fusible vinyl acetate copolymer fibres by means of
A) free radical polymerization, in an organic solvent or in aqueous suspension, of a comonomer composition comprising at least 40.0% by weight of vinyl acetate, 15.0 to 50.0% by weight of one or more chlorine-free, ethylenically unsaturated monomers whose homopolymers have a glass transition temperature Tg of 40 to 120°C, and 0.1 to 15.0% by weight of one or more ethylenically unsaturated monomers whose homopolymers have a glass transition temperature Tg of -100 to 0°C,
B) isolation of the vinyl acetate copolymers by precipitation, filtration with suction or removal of the liquid phase by distillation and drying, and
C) spinning the vinyl acetate copolymer from the solution or the melt.

3. Use of the vinyl acetate copolymer fibre according to Claim 1 or 2 as a fibrous binder for bonding naturally occurring or synthetic fibre materials.

## Revendications

1. Fibres fusibles en copolymère d'acétate de vinyle à base de copolymères d'acétate de vinyle, contenant :
(a) au moins 40,0% en poids d'unités acétate de vinyle;
(b) 15,0 à 50,0% en poids d'unités monomères d'un ou de plusieurs monomères éthyléniquement insaturés exempts de chlore, dont les homopolymères présentent une température de transition vitreuse Tg de 40°C à 120°C, et
(c) 0,1 à 15,0% en poids d'unités monomères d'un ou de plusieurs monomères éthyléniquement insaturés, dont les homopolymères présentent une température de transition vitreuse Tg de -100°C à 0°C.

2. Procédé de préparation de fibres fusibles en copolymère d'acétate de vinyle, au moyen :
(A) de la polymérisation radicalaire, dans un solvant organique ou en suspension aqueuse, d'une composition de comonomères comportant au moins 40,0% en poids d'acétate de vinyle, 15,0 à 50,0% en poids d'un ou de plusieurs monomères éthyléniquement insaturés exempts de chlore, dont les homopolymères présentent une température de transition vitreuse Tg de 40°C à 120°C, et 0,1 à 15,0% en poids d'un ou de plusieurs monomères éthyléniquement insaturés, dont les homopolymères présentent une température de transition vitreuse Tg de -100°C à 0°C;
(B) de l'isolement des copolymères d'acétate de vinyle par précipitation, par filtration par aspiration ou par distillation de la phase liquide et séchage, et
(C) de la filature des copolymères d'acétate de vinyle à partir de la solution ou de la masse en fusion.

3. Utilisation de la fibre en copolymère d'acétate de vinyle suivant la revendication 1 ou 2, comme liant fibreux pour le renforcement de matériaux fibreux naturels ou synthétiques.
